# EUROPÄISCHE PATENTSCHRIFT

(11) **EP 3 123 057 B1**
(45) Veröffentlichungstag und Bekanntmachung des Hinweises auf die Patenterteilung: **06.10.2021**
(21) Anmeldenummer: 15717085.3
(22) Anmeldetag: 26.03.2015
(51) Int. Cl.: F16F 15/14

(54) **FLIEHKRAFTPENDEL MIT FEDERANORDNUNG**
CENTRIFUGAL PENDULUM WITH SPRING ARRANGEMENT
PENDULE CENTRIFUGE AVEC AGENCEMENT DE RESSORTS

(30) Priorität: 27.03.2014 DE 102014205780
(43) Veröffentlichungstag der Anmeldung: 01.02.2017
(73) Patentinhaber: Schaeffler Technologies AG & Co. KG, 91074 Herzogenaurach (DE)
(72) Erfinder: DINGER, Christian, 77886 Lauf (DE)
(86) Internationale Anmeldenummer: PCT/DE2015/200198
(87) Internationale Veröffentlichungsnummer: WO 2015/144169

(56) Entgegenhaltungen:
- DE-A1-102009 042 818
- DE-A1-102011 004 443
- DE-A1-102011 088 925
- DE-A1-102013 211 966

## Beschreibung

Die Erfindung betrifft ein Fliehkraftpendel gemäß Patentanspruch 1
Aus der WO 2013/117841 A1 ist ein Fliehkraftpendel mit einem Pendelflansch und einer Pendelmasse bekannt, wobei der Pendelflansch ein erstes Pendelflanschteil und ein zweites Pendelflanschteil umfasst. Das erste Pendelflanschteil ist axial zum zweiten Pendelflanschteil beabstandet, wobei zwischen den beiden Pendelflanschteilen die Pendelmasse angeordnet ist und mittels einer Kulissenführung mit dem Pendelflansch beschränkt beweglich gekoppelt ist. Aus der DE 10 2009 042 818 A1, sowie aus der DE 10 2011 004 443 A1 ist ein Fliehkraftpendel mit einer Federanordnung bekannt, wobei die Federanordnung kraftübertragend mit der Pendelmasse gekoppelt ist, und aus der DE 10 2011 088925 A1 is ein Fliehkraftpendel nach dem Oberteil des Anspruchs 1 bekannt.

Es ist Aufgabe der Erfindung, ein verbessertes Fliehkraftpendel bereitzustellen.

Diese Aufgabe wird mittels eines Fliehkraftpendels gemäß Patentanspruch 1 gelöst. Vorteilhafte Ausführungsformen sind in den abhängigen Ansprüchen angegeben.

Erfindungsgemäß wurde erkannt, dass ein verbessertes Fliehkraftpendel dadurch bereitgestellt werden kann, dass das Fliehkraftpendel drehbar um eine Drehachse lagerbar ist und einen Pendelflansch und eine Pendelmasse aufweist. Die Pendelmasse ist dabei beschränkt beweglich mit dem Pendelflansch gekoppelt, wobei der Pendelflansch ein erstes Pendelflanschteil und wenigstens ein zweites Pendelflanschteil aufweist. Axial ist zumindest teilweise zwischen dem ersten Pendelflanschteil und dem zweiten Pendelflanschteil die Pendelmasse angeordnet. Ferner ist eine Federanordnung vorgesehen, wobei die Federanordnung axial zwischen den beiden Pendelflanschteilen zumindest teilweise angeordnet ist, wobei die Federanordnung mit der Pendelmasse zur Kraftübertragung zwischen der Pendelmasse und der Federanordnung gekoppelt ist.

Dadurch kann ein Anschlagen der Pendelmasse am Ende ihrer Pendelbahn vermieden werden, sodass Klackergeräusche beim Anschlagen der Pendelmasse am Ende der Pendelbahn vermieden werden. Ferner kann mittels der Federanordnung die Pendelmasse aus einer ausgelenkten Position zurück in eine Ruheposition auf der Pendelbahn gebracht werden.

Erfindungsgemäß umfasst das Fliehkraftpendel eine Kulissenführung. Die Kulissenführung koppelt die Pendelmasse mit dem Pendelflansch und ist ausgebildet, die Pendelmasse in einer Pendelbewegung entlang einer Pendelbahn zu führen, wobei die Federanordnung mit dem Pendelflansch gekoppelt ist. Die Federanordnung ist ausgebildet, zumindest teilweise die Pendelbahn der Pendelmasse zu begrenzen. Zusätzlich oder alternativ weist die Pendelmasse auf der Pendelbahn eine Ruheposition und wenigstens eine ausgelenkte Position auf. Die Federanordnung ist ausgebildet, die Pendelmasse aus der ausgelenkten Position in die Ruheposition zu überführen. Dadurch kann die Federanordnung die auf die Pendelmasse wirkende Fliehkraft im Betrieb des Fliehkraftpendels erhöhen, sodass bei gleichem Bauraum das Fliehkraftpendel höhere Drehungleichförmigkeiten, insbesondere hier höhere Drehschwingungen zu tilgen vermag.

Erfindungsgemäß weist das erste Pendelflanschteil eine erste Aufnahme und das zweite Pendelflanschteil eine in axialer Richtung gegenüberliegend zur ersten Aufnahme angeordnete zweite Aufnahme auf, wobei die Federanordnung axial im Wesentlichen zwischen den Pendelflanschteilen und in den Aufnahmen zumindest teilweise angeordnet ist. Dadurch kann die Federanordnung sowohl in axialer als auch in radialer Position zuverlässig gesichert werden.

In einer weiteren Ausführungsform weist die erste und/oder zweite Aufnahme eine im Wesentlichen in radialer Richtung verlaufende erste Anschlagsfläche und eine in Umfangsrichtung zur ersten Anschlagsfläche beabstandete zweite Anschlagsfläche auf. Die beiden Anschlagsflächen schließen bezogen auf die Drehachse einen ersten Winkel ein. Ein erstes Längsende schließt zu einem zweiten Längsende der Federanordnung bezogen auf die Drehachse einen zweiten Winkel ein. Der zweite Winkel ist dabei kleiner als der erste Winkel. Dadurch wird gewährleistet, dass die Pendelmassen entlang der Pendelbahn in einem bestimmten Bereich der Pendelbahn frei pendeln können, bevor die Federanordnung an der Anschlagsfläche anschlägt und die Pendelbahn begrenzt. Dabei wird zumindest ein Teil der Bewegungsenergie der Pendelmasse in die Federanordnung eingeleitet und dort gespeichert und/oder durch Reibung abgebaut.

Besonders vorteilhaft ist hierbei, wenn die erste Aufnahme als in axialer Richtung erstreckende erste Ausbuchtung im ersten Pendelflanschteil und/oder die zweite Aufnahme als in axialer Richtung erstreckende zweite Ausbuchtung ausgebildet ist. Dadurch können die Aufnahmen besonders einfach mittels eines Stanzbiegeverfahrens bei der Herstellung der Pendelflanschteile mit eingebracht werden.

In einer weiteren Ausführungsform weist die Pendelmasse eine dritte Aufnahme auf. In der dritten Aufnahme ist ein erstes Längsende der Federanordnung angeordnet. Dabei umfasst die Pendelmasse vorzugsweise ein erstes Pendelmassenteil und wenigstens ein zweites Pendelmassenteil. Vorzugsweise weist dabei das erste Pendelmassenteil eine erste Ausnehmung und das zweite Pendelmassenteil eine zweite Ausnehmung auf. Dabei überlappen vorzugsweise die erste und die zweite Ausnehmung und bilden die dritte Aufnahme aus.

In einer weiteren Ausführungsform ist eine weitere Pendelmasse vorgesehen. Die weitere Pendelmasse ist axial zwischen den beiden Pendelflanschteilen angeordnet, wobei die weitere Pendelmasse beschränkt beweglich mit dem Pendelflansch gekoppelt ist. Die Federanordnung ist in Umfangsrichtung zwischen der Pendelmasse und der weiteren Pendelmasse angeordnet. Dadurch kann die Federanordnung sowohl die Pendelbahn der Pendelmasse als auch der weiteren Pendelmasse begrenzen, sodass die Bauteilanzahl des Fliehkraftpendels reduziert ist.

In einer weiteren Ausführungsform weist die weitere Pendelmasse eine vierte Aufnahme auf. Die vierte Aufnahme ist in Umfangsrichtung gegenüberliegend zu der dritten Aufnahme angeordnet, wobei in der vierten Aufnahme ein zweites Längsende der Federanordnung angeordnet ist. Auf diese Weise kann die Federanordnung zuverlässig in dem Fliehkraftpendel fixiert werden.

In einer weiteren Ausführungsform umfasst die Federanordnung ein erstes Federelement und wenigstens ein zweites Federelement. Das erste Federelement umgreift umfangsseitig das zweite Federelement, wobei das erste Federelement eine erste Längserstreckung und das zweite Federelement eine zur ersten Längserstreckung abweichende zweite Längserstreckung aufweist. Das erste Federelement ist ausgebildet, ein Anschlagen der Pendelmasse an der Federanordnung in einem ersten Betriebszustand des Fliehkraftpendels abzufedern, wobei das erste Federelement zusammen mit dem zweiten Federelement ausgebildet ist, ein Anschlagen der Pendelmasse an der Federanordnung in einem vom ersten Betriebszustand unterschiedlichen zweiten Betriebszustand des Fliehkraftpendels abzufedern. Dadurch kann ein unterschiedliches Anschlagsverhalten der Federanordnung gewährleistet werden und unterschiedlich hohe Anschlagkräfte beispielsweise beim Abfangen der Pendelmasse beim Abstellen des Hubkolbenmotors (erster Betriebszustand) gegenüber einem Abfangen der Pendelmasse z.B. bei hohen Beschleunigungswerten, beispielsweise beim Wechseln einer Schaltstufe, insbesondere beim Wechseln von einer Neutralposition (N) eines automatischen Getriebes in eine Fahrposition (D), abzufedern.

Ferner ist von Vorteil, wenn das erste Pendelflanschteil mittels einer radial innen angeordneten ersten Verbindungseinrichtung und einer radial außen zur ersten Verbindungseinrichtung angeordneten zweiten Verbindungseinrichtung mit dem zweiten Pendelflanschteil verbunden ist. Radial zwischen der ersten und der zweiten Verbindungseinrichtung ist die Federanordnung angeordnet.

Nachfolgend wird die Erfindung anhand von Figuren näher erläutert. Dabei zeigen:
Figur 1 eine auf eine Draufsicht auf ein Fliehkraftpendel gemäß einer ersten Ausführungsform;
Figur 2 einen Halblängsschnitt durch das in Figur 1 gezeigte Fliehkraftpendel entlang einer in Figur 1 gezeigten Schnittebene A-A;
Figur 3 einen Halblängsschnitt durch das in Figur 1 gezeigte Fliehkraftpendel entlang einer in Figur 1 gezeigten Schnittebene B-B;
Figur 4 einen Ausschnitt der in Figur 1 gezeigten Draufsicht auf das in Figur 1 gezeigte Fliehkraftpendel in einem ersten Betriebszustand;
Figur 5 einen Ausschnitt der in Figur 1 gezeigten Draufsicht auf das in Figur 1 gezeigte Fliehkraftpendel in einem zweiten Betriebszustand;
Figur 6 einen Ausschnitt einer Draufsicht auf ein Fliehkraftpendel gemäß einer zweiten Ausführungsform in dem zweiten Betriebszustand;
Figur 7 eine Schnittansicht durch eine Federanordnung der in den Figuren 1 bis 6 gezeigten Fliehkraftpendel;
Figur 8 eine Draufsicht auf ein Fliehkraftpendel gemäß einer dritten Ausführungsform;
Figur 9 eine Schnittansicht durch das in Figur 8 gezeigte Fliehkraftpendel entlang einer in Figur 8 gezeigten Schnittebene C-C; und
Figur 10 eine Schnittansicht durch das in Figur 8 gezeigte Fliehkraftpendel entlang einer in Figur 8 gezeigten Schnittebene D-D;
Figur 11 einen Längsschnitt durch eine Pendelmasse der in den Figuren 1 bis 10 gezeigten Fliehkraftpendel;
Figur 12 eine Draufsicht auf ein Fliehkraftpendel gemäß einer vierten Ausführungsform;
Figur 13 eine Schnittansicht durchdas in Figur 12 gezeigte Fliehkraftpendel entlang einer in Figur 12 gezeigten Schnittebene C-C; und
Figur 14 eine Schnittansicht durch das in Figur 12 gezeigte Fliehkraftpendel entlang einer in Figur 12 gezeigten Schnittebene E-E;

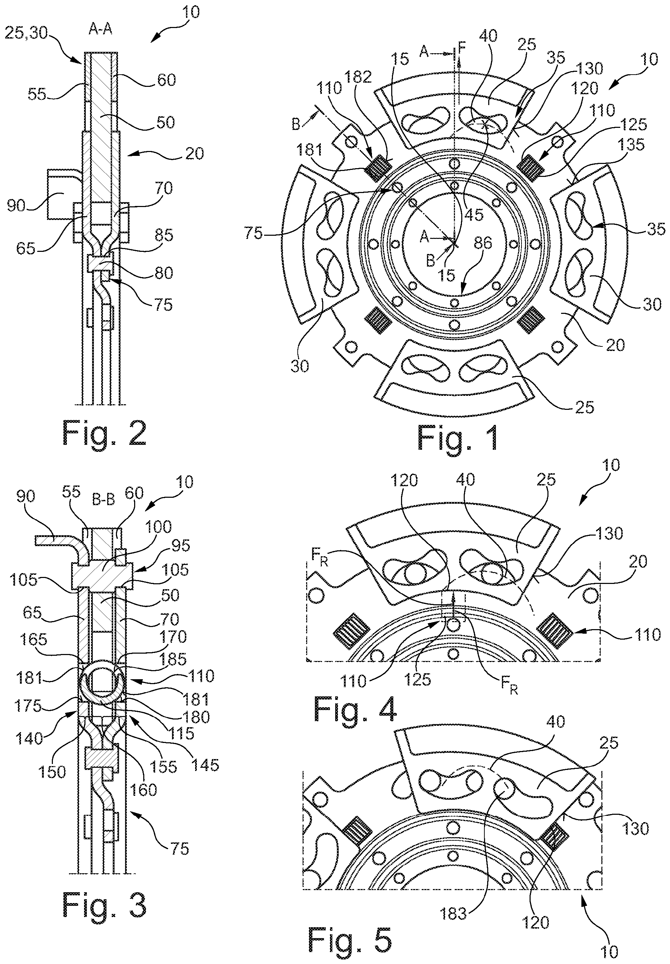

Fig. 1 zeigt eine Draufsicht auf ein Fliehkraftpendel 10 gemäß einer ersten Ausführungsform. Fig. 2 zeigt einen Halblängsschnitt durch das in Fig. 1 gezeigte Fliehkraftpendel 10 entlang einer in Fig. 1 gezeigten Schnittebene A-A. Fig. 3 zeigt einen Halblängsschnitt durch das in Fig. 1 gezeigte Fliehkraftpendel 10 entlang einer in Fig. 1 gezeigten Schnittebene B-B. Fig. 4 zeigt einen Ausschnitt der in Fig. 1 gezeigten Draufsicht auf das in Fig. 1 gezeigte Fliehkraftpendel in einem ersten Betriebszustand und Fig. 5 zeigt einen Ausschnitt der in Fig. 1 gezeigten Draufsicht auf das in Fig. 1 gezeigte Fliehkraftpendel 10 in einem zweiten Betriebszustand. Nachfolgend werden die Figuren 1 bis 5 gemeinsam erläutert. Dabei ist in Fig. 1, 4, 5 auf die Darstellung aller Komponenten des Fliehkraftpendels zur verbesserten Darstellung des Fliehkraftpendels 10 verzichtet worden.

Das Fliehkraftpendel 10 ist drehbar um eine Drehachse 15 gelagert und mit einem Hubkolbenmotor in einem Antriebsstrang eines Kraftfahrzeugs koppelbar. Das Fliehkraftpendel 10 ist ausgebildet, Drehungleichförmigkeiten in einem durch den Antriebsstrang zu übertragenden Drehmoment zu tilgen, um so einen besonders leisen und effektiven Antriebsstrang für das Kraftfahrzeug bereitzustellen. Dabei kann das Fliehkraftpendel 10 mit unterschiedlichen Komponenten des Antriebsstrangs gekoppelt sein.

Das Fliehkraftpendel 10 weist einen Pendelflansch 20, eine erste Pendelmasse 25 und eine zweite Pendelmasse 30 auf. Die erste Pendelmasse 25 ist in Umfangsrichtung benachbart zu der zweiten Pendelmasse 30 angeordnet. In Fig. 1 sind weitere Pendelmassen 25, 30 dargestellt, die identisch zu der ersten bzw. zweiten Pendelmasse 25, 30 ausgebildet sind und in Umfangsrichtung angrenzend an die Pendelmassen 25, 30 angeordnet sind. Die Pendelmassen 25, 30 sind mittels einer Kulissenführung 35 beschränkt beweglich mit dem Pendelflansch 20 gekoppelt. Dabei führt die Kulissenführung 35 die Pendelmassen 25, 30 entlang einer Pendelbahn 40. Die Pendelbahn 40 weist eine Ruheposition 45 auf, bei der die Pendelmasse 25, 30 bezogen auf die Drehachse 15 den größten radialen Abstand aufweist. In der Ruheposition befindet sich die Pendelmasse 25, 30 im Betrieb des Fliehkraftpendels 10, wenn keine Drehungleichförmigkeiten in das Fliehkraftpendel 10 eingeleitet werden. Wird in das Fliehkraftpendel 10 eine Drehunförmigkeit, insbesondere eine Drehschwingung eingeleitet, so wird die Pendelmasse 25, 30 aus ihrer Ruheposition 45 ausgelenkt und radial nach innen und in Umfangsrichtung entlang der Pendelbahn 40 durch die Kulissenführung 35 geführt. Dabei pendelt die Pendelmasse 25, 30 entlang der Pendelbahn 40 und tilgt aufgrund ihrer Trägheit und ihrer nacheilenden Pendelbewegung die Drehunförmigkeit.

Die Pendelmasse 25, 30 weist (vgl. Figuren 2 und 3) ein erstes Pendelmassenteil 50, ein zweites Pendelmassenteil 55 und ein drittes Pendelmassenteil 60 auf. Das zweite und dritte Pendelmassenteil 55, 60 sind beidseitig des ersten Pendelmassenteils 50 angeordnet. Das erste Pendelmassenteil 50 ist über die Kulissenführung 35 mit dem Pendelflansch 20 gekoppelt. Das zweite und dritte Pendelmassenteil 55, 60 sind dabei radial außenseitig zu dem Pendelflansch 20 angeordnet. Selbstverständlich ist auch denkbar, dass die Pendelmasse 25, 30 einteilig ausgebildet ist.

Der Pendelflansch 20 weist ein erstes Pendelflanschteil 65 und ein zweites Pendelflanschteil 70 auf. Das erste und zweite Pendelflanschteil 65, 70 sind radial außenseitig etwa auf Höhe der Pendelmasse 25, 30 axial zueinander beabstandet. Radial innenseitig zu der Pendelmasse 25, 30 sind die Pendelflanschteile 65, 70 mittels einer ersten Verbindungseinrichtung 75 verbunden. Die erste Verbindungseinrichtung 75 weist in der Ausführungsform beispielsweise einen Nietbolzen 80 auf, der durch entsprechend in den Pendelflanschteilen 65, 70 angeordnete Nietlöcher 85 geführt ist.

Radial innenseitig zu der ersten Verbindungseinrichtung 75 kann der Pendelflansch 20 mittels einer Kopplungseinrichtung 86 mit weiteren Komponenten des Antriebsstrangs verbunden werden. Insbesondere ist hierbei denkbar, den Pendelflansch 20 mit einem Lamellenträger 90 einer Kupplungseinrichtung und/oder einem Torsionsschwingungsdämpfer zu verbinden. Auch ist denkbar, dass das erste Pendelflanschteil 65 Teil des Lamellenträgers 90, wie in Fig. 3 gezeigt, ist.

Radial außenseitig zu der ersten Verbindungseinrichtung 75 ist eine zweite Verbindungseinrichtung 95 vorgesehen (vgl. Figur 3). Die zweite Verbindungseinrichtung 95 koppelt die axial beabstandeten Pendelflanschabschnitte 65, 70 radial außenseitig miteinander und weist einen Abstandsbolzen 100 und weitere Nietlöcher 105 im ersten Pendelflanschteil 75 bzw. im zweiten Pendelflanschteil 70 auf, die der Abstandsbolzen 100 durchgreift. Der Abstandsbolzen 100 sichert zuverlässig auch den axialen Abstand des ersten Pendelflanschteils 75 zu dem zweiten Pendelflanschteil 70, so dass sich die Pendelflanschteile 65, 70 nicht aufbiegen können.

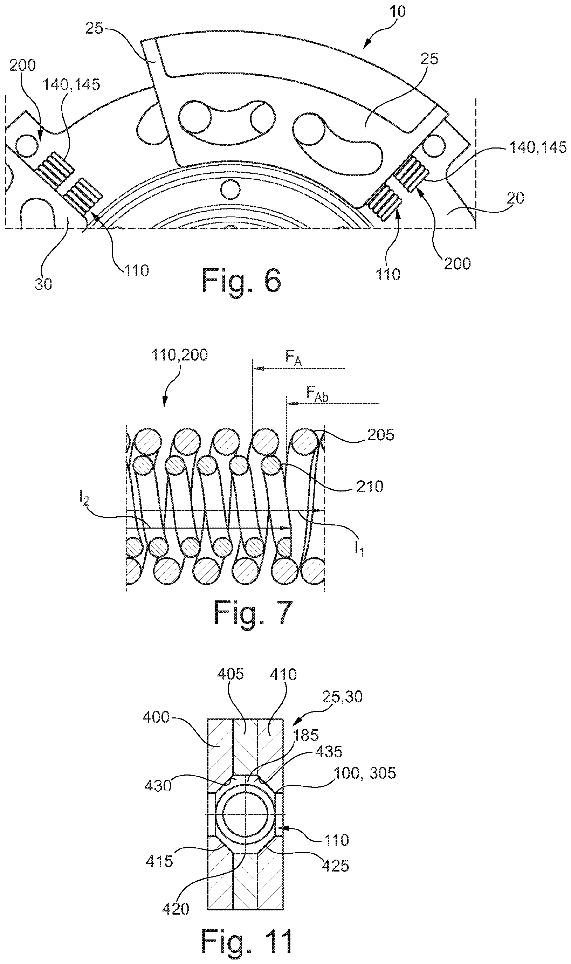

Radial zwischen der ersten Verbindungseinrichtung 75 und der zweiten Verbindungseinrichtung 95 ist eine Federanordnung 110 vorgesehen. In Umfangsrichtung ist ferner die Federanordnung 110 zwischen der ersten Pendelmasse 25 und der zweiten Pendelmasse 30 angeordnet. Die erste Federanordnung 110 umfasst ein Federelement 115, das sich im Wesentlichen in Umfangsrichtung erstreckt. Das Federelement 115 ist in der Ausführungsform beispielhaft als Druckfeder ausgebildet. Selbstverständlich ist auch denkbar, dass die Federanordnung 110 eine Bogenfeder oder eine Blockfeder umfasst. Auch ist denkbar, dass mehrere Federelemente in Reihe oder parallel angeordnet sind. Selbstverständlich ist auch denkbar, dass die Federanordnung 110 wie in Fig. 7 später erläutert, ausgebildet ist.

Die Federanordnung 110 weist ein erstes Längsende 120 und ein zweites Längsende 125 auf. Das erste Längsende 120 ist dabei einer ersten Seitenfläche 130 der ersten Pendelmasse 25 und das zweite Längsende einer zweiten Seitenfläche 135 der zweiten Pendelmasse 30 zugewandt. Die beiden Seitenflächen 130, 135 sind in Umfangsrichtung gegenüberliegend zueinander angeordnet.

Das erste Pendelflanschteil 65 weist eine erste Aufnahme 140 und das zweite Pendelflanschteil 70 weist eine zweite Aufnahme 145 auf. Die erste Aufnahme 140 und die zweite Aufnahme 145 sind in axialer Richtung gegenüberliegend zueinander angeordnet. Dabei nimmt die erste Aufnahme 140 einen ersten Abschnitt 150 der Federanordnung 110 und die zweite Aufnahme einen zweiten Abschnitt 155 der Federanordnung 110 auf. Ein dritter Abschnitt 160 ist axial zwischen dem ersten und dem zweiten Abschnitt 150, 155 angeordnet und somit zwischen den beiden Pendelflanschteilen 65, 70.

In der Ausführungsform ist die erste Aufnahme 140 als erste Ausnehmung 165 im ersten Pendelflanschteil 65 und die zweite Aufnahme 145 als zweite Ausnehmung 170 im zweiten Pendelflanschteil 70 ausgebildet. Die erste Ausnehmung 165 weist dabei eine erste Ausnehmungskontur 175 und die zweite Ausnehmung 170 eine zweite Ausnehmungskontur 180 auf. Die Federanordnung 110 ist dabei derart ausgebildet, dass eine äußere Umfangsseite 185 jeweils an der ersten Ausnehmungskontur 175 bzw. zweiten Ausnehmungskontur 180 anliegt. Besonders vorteilhaft ist hierbei, wenn die Federanordnung 110 in den Aufnahmen 140, 145 vorgespannt angeordnet ist, sodass die Position durch ein Anliegen der Längsenden 120, 125 an den gegenüber zueinander angeordneten Stirnflächen 181, 182 der Ausnehmungskontur 175, 180 festgelegt wird. Selbstverständlich ist auch denkbar, dass die Federanordnung 110 ohne Vorspannung, insbesondere lose, in den Aufnahmen 140, 145 angeordnet ist. Dabei wird unter einer losen Anordnung verstanden, dass eine Erstreckung in Umfangsrichtung der Federanordnung 110 kleiner ist als eine Erstreckung der Aufnahmen 140, 150 in Umfangsrichtung.

Wird die Pendelmasse 25, 30 bei Einleitung einer Drehunförmigkeit bzw. einer Drehschwingung aus ihrer Ruheposition 45 entlang der Pendelbahn 40 ausgelenkt, so kann die Pendelmasse 25, 30, insbesondere bei hohen Beschleunigungen, oder beim Abstellen des Hubkolbenmotors, in eine Endposition 183 (vgl. Figur 5) der Pendelbahn 40 geführt werden. Dabei schlägt die Seitenfläche 130, 135 an dem Längsende 120, 125 im dritten Abschnitt 160 der Federanordnung 110 an, wobei die Federanordnung 110 beim Anschlagen der Pendelmasse 25, 30 eine Kraft bzw. eine kinetische Energie aus der Pendelmasse 25, 30 in dem Pendelflansch 20 ableitet und somit zum einen die Pendelbahn 40 begrenzt und zum anderen ein Anschlagen der Pendelmassen 25, 30 an einem Ende der Kulissenführung 35 vermeidet. Auch wird das gegenseitige Anschlagen der Pendelmassen 25, 30 aneinander vermieden. Dadurch kann ein besonders leises Fliehkraftpendel bereitgestellt werden.

In der Ausführungsform ist im normalen Betrieb des Fliehkraftpendels die Seitenfläche 130, 135 zum Längsende 120, 125 der Federanordnung 110 beabstandet angeordnet. Selbstverständlich ist auch denkbar, dass das Längsende 120, 125 an der Seitenfläche 130, 135 auch im Betrieb des Fliehkraftpendels 10 anliegt und so gewährleistet wird, dass die Federanordnung 110 die Pendelmasse 25, 30 aus einer ausgelenkten Position z. B. der Endposition 183 (vgl. Fig. 5) zurück in die Ruheposition (vgl. Fig. 4) führen kann. Dadurch kann eine auf die Pendelmasse 25, 30 wirkende Fliehkraft F verstärkt werden, sodass das Fliehkraftpendel 10 insgesamt bei gleicher Ausgestaltung höhere Drehunförmigkeiten tilgen kann.

In der Ausführungsform ist die Federanordnung 110 im Wesentlichen in Umfangsrichtung verlaufend ausgerichtet. Selbstverständlich ist auch denkbar, dass die Federanordnung 110 eine andere Ausrichtung, insbesondere in radialer Richtung aufweist. Auch ist denkbar, dass die Federanordnung 110 anstatt einer Anordnung in Umfangsrichtung zwischen den beiden Pendelmassen 25, 30 radial innenseitig der Pendelmasse 25, 30 angeordnet ist, und ein Längsende 120, 125 einer inneren Umfangsfläche 185 zugewandt ist. Diese Ausgestaltung ist strichliert beispielhaft in Fig. 4 dargestellt.

Selbstverständlich ist auch denkbar, dass die in Fig. 4 gezeigten Federanordnungen 110 miteinander kombiniert werden. Dabei stellt die Federanordnung 110 zusätzlich zu der Fliehkraft F eine weitere Rückstellkraft F_{R} bereit.

Fig. 6 zeigt eine Draufsicht auf ein Fliehkraftpendel 10 gemäß einer zweiten Ausführungsform. Das Fliehkraftpendel 10 ist im Wesentlichen identisch zu dem in den Figuren 1 bis 5 gezeigten Fliehkraftpendel 10 ausgebildet. Abweichend dazu ist zusätzlich zu der Federanordnung 110 eine weitere radial außen zur Federanordnung 110 angeordnete Federanordnung 200 vorgesehen. Die weitere Federanordnung 200 ist identisch zu der bereits in den Figuren 1 bis 5 erläuterten Federanordnung 110 ausgebildet. Um die weitere Federanordnung 200 am Pendelflansch 20 zu fixieren, weist der Pendelflansch 20 weitere korrespondierend zur weiteren Federanordnung 200 ausgebildete Aufnahmen 140, 145 auf, die identisch zu den bereits in den Figuren 1 bis 5 erläuterten Aufnahmen 140, 145 ausgebildet sind. Durch das Vorsehen von zwei Federanordnungen 110, 120 in Umfangsrichtung zwischen den beiden Pendelmassen 25, 30 kann auch eine besonders mit hoher Masse versehene Pendelmasse 25, 30 und/oder eine besonders hohe kinetische Energie aus der Pendelmasse 25, 30 durch die Federanordnungen 110, 200 abgefedert werden.

Fig. 7 zeigt eine Schnittansicht durch die Federanordnung 110, 200 der in den Figuren 1 bis 6 gezeigten Fliehkraftpendel 10.

Die Federanordnung 110, 200 umfasst ein erstes Federelement 205 und ein zweites Federelement 210. Das erste Federelement 205 umgreift umfangsseitig das zweite Federelement 210. Das erste Federelement 205 und das zweite Federelement 210 sind dabei als Schraubenfedern ausgebildet und weisen jeweils eine Windungsrichtung auf. Dabei ist die Windungsrichtung des ersten Federelements 205 entgegengesetzt zur Windungsrichtung des zweiten Federelements 210. Selbstverständlich ist auch denkbar, dass die Windungsrichtungen identisch sind oder andersartig ausgebildet als in Fig. 7 gezeigt sind.

In der Ausführungsform weist das erste Federelement 205 eine erste Längserstreckung I₁ und das zweite Federelement 210 eine zur ersten Längserstreckung I₁ abweichende zweite Längserstreckung I₂ auf. Dabei ist die erste Längserstreckung des ersten Federelements 205 in Abhängigkeit einer ersten Steifigkeit des ersten Federelements 205 derart gewählt, dass das erste Federelement 205 einen ersten Betriebszustand, beispielsweise ein Abschalten des Hubkolbenmotors und damit ein verbundenes Überführen der Pendelmassen 25, 30 in ihre Endposition 183 an den Pendelbahnen 40, abzufedern, ohne dass das zweite Federelement 210 in Berührkontakt mit der Pendelmasse 25, 30 tritt.

Eine zweite Längserstreckung I₂ des zweiten Federelements 210 ist in Abhängigkeit einer zweiten Steifigkeit des zweiten Federelements 210 derart zu der ersten Längserstreckung I₁ bzw. in Abhängigkeit der ersten Steifigkeit des ersten Federelements 205 gewählt, dass in einem zweiten Betriebszustand, insbesondere beim Auftreten von erhöhten Beschleunigungen auf die Pendelmassen 25, 30 das erste Federelement 205 zusammen mit dem zweiten Federelement 210 die Pendelmassen 25, 30 am Ende der Pendelbahnen 40 auffangen bzw. abfedern. Dabei treten beide Federelemente 205, 210 in Berührkontakt mit der Pendelmasse 25, 30. So kann insbesondere beim Wechsel von Schaltstufen, beispielsweise von einer Neutralstellung (N) in eine Antriebsstellung (D) bei einem Automatikgetriebe oder von einer Schaltstellung vom Fahrbetrieb (D) auf die Neutralstellung (N) ein Klappergeräusch des Fliehkraftpendels 10 vermieden werden.

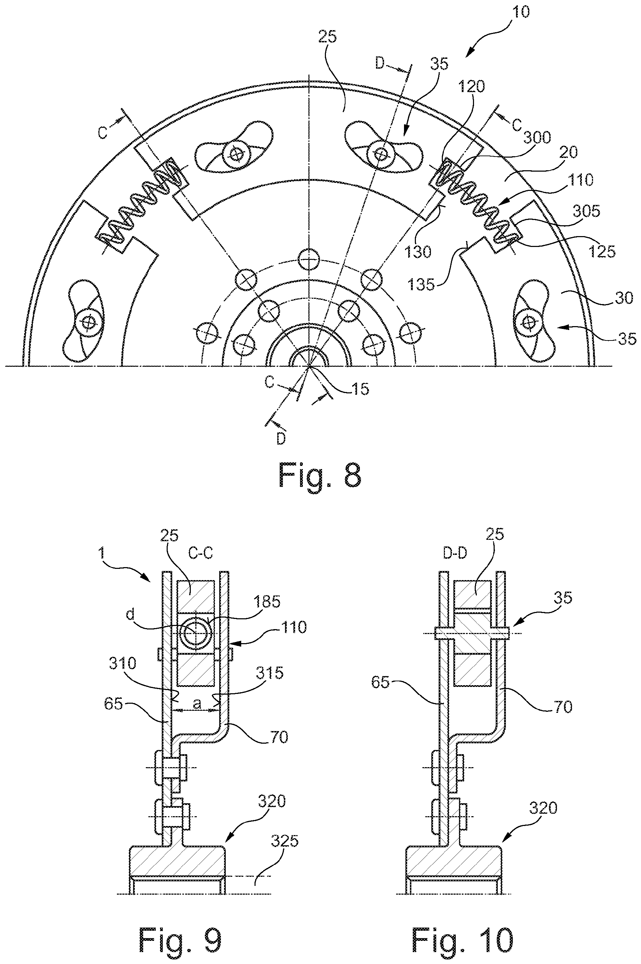

Fig. 8 zeigt eine Draufsicht auf ein Fliehkraftpendel 10 gemäß einer dritten Ausführungsform. Fig. 9 zeigt eine Schnittansicht durch das in Fig. 8 gezeigte Fliehkraftpendel 10 entlang einer in Fig. 8 gezeigten Schnittebene C-C. Fig. 10 zeigt eine Schnittansicht durch das in Fig. 8 gezeigte Fliehkraftpendel 10 entlang einer in Fig. 8 gezeigten Schnittebene D-D.

Das in den Figuren 8 bis 10 gezeigte Fliehkraftpendel 10 ist ähnlich zu dem in den Figuren 1 bis 7 gezeigten Fliehkraftpendel 10 ausgebildet. Abweichend dazu wurde auf die erste und zweite Aufnahme 140, 145 im Pendelflansch 20 verzichtet. Stattdessen weist die erste Pendelmasse 25 eine dritte Aufnahme 300 und die zweite Pendelmasse 30 eine vierte Aufnahme 305 auf. Die beiden Aufnahmen 300, 305 sind radial etwa auf gleicher Höhe angeordnet und in Umfangsrichtung gegenüberliegend zueinander angeordnet. Die Aufnahmen 300, 305 sind dabei teilringförmig ausgebildet. Dabei nimmt die dritte Aufnahme 300 das erste Längsende 120 der Federanordnung 110 und die vierte Aufnahme 305 das zweite Längsende 125 der Federanordnung 110 auf. Die Seitenflächen 130, 135 sind in Umfangsrichtung beabstandet zueinander angeordnet, sodass die Federanordnung 110 zwischen den Pendelmassen 25, 30 einfedern kann und somit eine Kraftübertragung zwischen der ersten Pendelmasse 25 und der zweite Pendelmasse 30 durch die Federanordnung 110 erfolgen kann.

In der Ausführungsform ist dabei ein axialer Abstand a zwischen einer ersten Innenfläche 310 des ersten Pendelflanschteils 65 zu einer zweiten Innenfläche 315 des zweiten Pendelflanschteils 70 derart gewählt, dass der Abstand a im Wesentlichen einem Außendurchmesser d bezogen auf die äußere Umfangsfläche 185 der Federanordnung 110 ist. Dadurch kann die axiale Position der Federanordnung 110 auch zwischen den beiden Seitenflächen 130, 135 der Pendelmassen 25, 30 zuverlässig gesichert werden.

Ferner ist abweichend zu den Figuren 1 bis 5 in der Ausführungsform das Fliehkraftpendel 10 anstatt mit einem Lamellenträger 90 mit einer Nabe 320 verbunden. Die Nabe 320 dient dazu, beispielsweise mit einer Getriebeeingangswelle 325 gekoppelt zu werden.

Fig. 11 zeigt eine Schnittansicht durch eine Variante der in den Figuren 1 bis 10 gezeigten Pendelmassen 25, 30. Im Gegensatz zu der in den Figuren 1 bis 10 gezeigten Pendelmassen 25, 30 ist diese nicht einteilig, sondern mehrteilig ausgeführt und weist ein erstes Pendelmassenteil 400, ein zweites Pendelmassenteil 405 und ein drittes Pendelmassenteil 410 auf. Die Pendelmassenteile 400, 405, 410 sind dabei axial angrenzend aneinander angeordnet. Die Pendelmassenteile 400, 405, 410 bilden dabei zusammen die dritte bzw. vierte Aufnahme 300, 305 aus. Dabei weist das erste Pendelmassenteil 400 eine dritte Ausnehmung 415, das zweite Pendelmassenteil 405 eine vierte Ausnehmung 420 und das dritte Pendelmassenteil 410 eine fünfte Ausnehmung 425 auf. Die dritte, vierte, fünfte Ausnehmung 415, 420, 425 überlappen in axialer Richtung und bilden die dritte bzw. vierte Aufnahme 300, 305 aus. Dabei weist die erste Ausnehmung 415 eine schräg zur Drehachse 15 angeordnete dritte Innenfläche 430 und die fünfte Ausnehmung 425 eine schräg zur Drehachse 15 angeordnete vierte Innenfläche 435 auf. Die dritte bzw. vierte Innenfläche 430, 435 sind in ihrer Anordnung korrespondierend zur äußeren Umfangsfläche 185 der Federanordnung 110 ausgebildet. Dadurch kann die axiale Position der Federanordnung 110 in der dritten bzw. vierten Aufnahme 300, 305 zuverlässig gesichert werden. Ferner wird vermieden, dass die äußere Umfangsfläche 185 der Federanordnung an der ersten und/oder zweiten Innenfläche 310, 315 des Pendelflanschs 20 anliegt. Die zweite Ausnehmung 420 ist dabei korrespondierend zum Außendurchmesser der Federanordnung 110 ausgebildet.

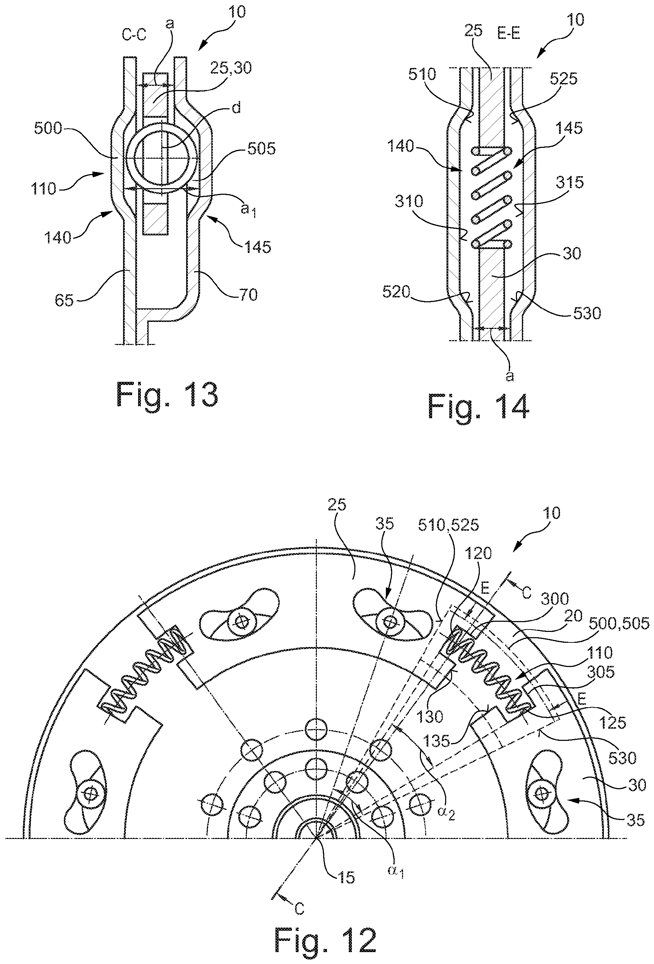

Fig. 12 zeigt eine Draufsicht auf ein Fliehkraftpendel 10 gemäß einer vierten Ausführungsform. Das Fliehkraftpendel 10 ist eine Kombination aus den in den Figuren 1 bis 10 gezeigten Ausführungsformen des Fliehkraftpendels 10. Dabei ist der Abstand a, wie bei dem in den Figuren 1 bis 5 gezeigten Fliehkraftpendel 10, kleiner als der Außendurchmesser d der Federanordnung 110.

Die erste Aufnahme 140 weist dabei eine in axialer Richtung von der Federanordnung 110 sich wegerstreckende erste Ausbuchtung 500 im ersten Pendelflanschteil 65 auf. Die zweite Aufnahme 145 weist eine in axialer Richtung von der Federanordnung 110 sich wegerstreckende zweite Ausbuchtung 505 auf. Der Pendelflansch 20 kann mit den Ausbuchtungen 500, 505 besonders einfach mittels eines Stanzbiegeverfahrens hergestellt werden. Auch ist denkbar, dass die Ausbuchtungen 500, 505 mit den in den Figuren 1 bis 5 gezeigten Ausnehmungen 165, 170 der ersten bzw. zweiten Aufnahme 140, 145 kombiniert werden.

Ein Abstand a₁ zwischen den Innenflächen 310, 315 im Bereich der ersten bzw. zweiten Aufnahme 140, 145 ist dabei größer oder gleich dem Außendurchmesser d der Federanordnung 110 und größer als der Abstand a zwischen den Innenflächen 310, 315 im Bereich der Anordnung der Pendelmassen 25, 30. In radialer Richtung sind die Aufnahmen 140, 145 etwa auf Höhe der beiden Pendelmassen 25, 30, insbesondere auf Höhe der Federanordnung 110 angeordnet. Sind die Aufnahmen 140, 145 in radialer Richtung an die die Federanordnung 110 korrespondierend angepasst, kann gleichzeitig gewährleistet werden, dass die Federanordnung 110 in radialer Richtung bei Betätigung nicht in radialer Richtung ausbrechen kann. Ferner ist die radiale Position der Federanordnung 110 auch bei hohen Drehzahlen des Fliehkraftpendels 10 sichergestellt. In der Ausführungsform wird die Federanordnung 110 durch die Pendelflanschteile 65, 70 bzw. die in den Pendelflanschteilen 65, 70 angeordneten Aufnahmen 140, 145 sowohl in axialer als auch radialer Richtung geführt. Selbstverständlich ist auch denkbar, auf die Führung in zumindest einer, gegebenenfalls auch beiden Richtungen zu verzichten.

In der Ausführungsform weist die erste Aufnahme 140 eine erste Anschlagsfläche 510 und eine in Umfangsrichtung zur ersten Anschlagsfläche 510 beabstandet angeordnete zweite Anschlagsfläche 520 auf. Ebenso weist die zweite Aufnahme 140 eine dritte Anschlagsfläche 525 und eine in Umfangsrichtung zur dritten Anschlagsfläche 520 beabstandet angeordnete vierte Anschlagsfläche 530 auf. Die Anschlagsflächen 510, 520, 525, 530 sind dabei im Wesentlichen parallel ausgerichtet und erstrecken sich in radialer Richtung. Dabei ist die erste Anschlagsfläche 510 zusammen mit der dritten Anschlagsfläche 525 bzw. die zweite Anschlagsfläche 520 und die vierte Anschlagsfläche 530 jeweils in einer Ebene angeordnet, in der ebenso die Drehachse 15 verläuft.

Die erste Anschlagsfläche 510 schließt zusammen mit der zweiten Anschlagsfläche 520 sowie die dritte Anschlagsfläche 525 mit der vierten Anschlagsfläche 530 bezogen auf die Drehachse 15 einen ersten Winkel α₁, ein. Das erste Längsende 120 der Federanordnung 110 schließt bezogen auf die Drehachse 15 zusammen mit dem zweiten Längsende 125 einen zweiten Winkel α₂ ein. Der zweite Winkel α₂ ist dabei kleiner als der erste Winkel α₁. Dadurch wird gewährleistet, dass zum einen eine Kraftübertragung zwischen den Pendelmassen 25, 30 gewährleistet wird, und bei einem Überschreiten eines vordefinierten Punktes der Pendelbahn 40 bzw. bei Überschreiten eines vordefinierten Pendelwinkels der Pendelmasse 25, 30 das Längsende 120, 125 an der dem Längsende 120, 125 zugewandten Anschlagsfläche 510, 525, 520, 530 anschlägt, sodass ein Teil der Bewegungsenergie aus der Pendelmasse 25, 30 in die Federanordnung 110 abgeleitet und dort gespeichert oder mittels Reibung der äußeren Umfangsfläche 185 an der Aufnahme 140, 145 zum Teil abgebaut wird.

Selbstverständlich ist auch denkbar, dass die Federanordnung 110 anstatt mit der dritten und vierten Aufnahme 300, 305 eine andersartige Verbindung zu den Pendelmassen 25, 30 vorgesehen ist. Auch ist denkbar, dass die Federanordnung durch die Pendelmassen geführt wird, wobei im Bereich der Federanordnung die Pendelmassen unterschiedliche Geometrien zueinander aufweisen.

Ferner wird darauf hingewiesen, dass selbstverständlich die Merkmale der in den Figuren 1 bis 14 gezeigten Ausgestaltungen der Fliehkraftpendel miteinander kombiniert werden können. Insbesondere ist dabei auch denkbar, die in Fig. 11 gezeigte Pendelmasse in den in den Figuren 1 bis 10 gezeigten Fliehkraftpendeln bzw. den in den Figuren 12 bis 14 gezeigten Fliehkraftpendel 10 zu verwenden. Dabei kann selbstverständlich die in Fig. 11 gezeigte Pendelmasse 25, 30 auch eine andere Anzahl von Pendelmassenteilen 400, 405, 410 aufweisen.

### Bezugszeichenliste

- 10: Fliehkraftpendel
- 15: Drehachse
- 20: Pendelflansch
- 25: Erste Pendelmasse
- 30: Zweite Pendelmasse
- 35: Kulissenführung
- 40: Pendelbahn
- 45: Ruheposition
- 50: Erstes Pendelmassenteil
- 55: Zweites Pendelmassenteil
- 60: Drittes Pendelmassenteil
- 65: Erstes Pendelflanschteil
- 70: Zweites Pendelflanschteil
- 75: Erste Verbindungseinrichtung
- 80: Nietbolzen
- 85: Nietloch
- 86: Kopplungseinrichtung
- 90: Lamellenträger
- 95: Zweite Verbindungseinrichtung
- 100: Abstandsbolzen
- 105: Weiteres Nietloch
- 110: Federanordnung
- 115: Federelement
- 120: Erstes Längsende
- 125: Zweites Längsende
- 130: Erste Seitenfläche (der ersten Pendelmasse)
- 135: Zweite Seitenfläche (der zweiten Pendelmasse)
- 140: Erste Aufnahme (im ersten Pendelflanschteil)
- 145: Zweite Aufnahme (im zweiten Pendelflanschteil)
- 150: Erster Abschnitt
- 155: Zweiter Abschnitt
- 160: Dritter Abschnitt
- 165: Erste Ausnehmung
- 170: Zweite Ausnehmung
- 175: Erste Ausnehmungskontur
- 180: Zweite Ausnehmungskontur
- 181: Stirnfläche
- 182: Stirnfläche
- 183: Endposition
- 185: Äußere Umfangsfläche
- 200: Weitere Federanordnung
- 205: Erstes Federelement
- 210: Zweites Federelement

- 300: Dritte Aufnahme
- 305: Vierte Aufnahme
- 310: Erste Innenfläche
- 315: Zweite Innenfläche

- 400: Erstes Pendelmassenteil
- 405: Zweites Pendelmassenteil
- 410: Drittes Pendelmassenteil
- 415: Dritte Ausnehmung
- 420: Vierte Ausnehmung
- 425: Fünfte Ausnehmung
- 430: Dritte Innenfläche
- 435: Vierte Innenfläche

- 500: Erste Ausbuchtung
- 505: Zweite Ausbuchtung
- 510: Erste Anschlagsfläche
- 520: Zweite Anschlagsfläche
- 525: Dritte Anschlagsfläche
- 530: Vierte Anschlagsfläche

## Patentansprüche

1. Fliehkraftpendel (10), das drehbar um eine Drehachse (15) lagerbar ist,
- aufweisend einen Pendelflansch (20) und wenigstens eine Pendelmasse (25, 30),
- wobei die Pendelmasse (25, 30) beschränkt beweglich mit dem Pendelflansch (20) gekoppelt ist,
- wobei der Pendelflansch (20) ein erstes Pendelflanschteil (65) und ein wenigstens zweites Pendelflanschteil (70) aufweist,
- wobei axial zumindest teilweise zwischen dem ersten Pendelflanschteil (65) und dem zweiten Pendelflanschteil (70) die Pendelmasse (25, 30) angeordnet ist, **dadurch gekennzeichnet, dass**
- eine Federanordnung (110, 200) vorgesehen ist,
- wobei die Federanordnung (110, 200) axial zwischen den Pendelflanschteilen (65, 70) zumindest teilweise angeordnet ist,
- wobei die Federanordnung (110, 200) mit der Pendelmasse (25, 30) zur Kraftübertragung zwischen der Pendelmasse (25, 30) und der Federanordnung (110, 200) gekoppelt ist, wobei das Fliehkraftpendel (10) eine Kulissenführung (35) aufweist,
- wobei die Kulissenführung (35) die Pendelmasse (25, 30) mit dem Pendelflansch (20) koppelt und ausgebildet ist, die Pendelmasse (25, 30) in einer Pendelbewegung entlang einer Pendelbahn (40) zu führen,
- wobei die Federanordnung (110, 200) mit dem Pendelflansch (20) gekoppelt ist, und die Federanordnung (110, 200) ausgebildet ist, zumindest teilweise die Pendelbahn (40) der Pendelmasse (25, 30) zu begrenzen, und/oder die Pendelmasse (25, 30) auf der Pendelbahn (40) eine Ruheposition (45) und wenigstens eine ausgelenkte Position (183) aufweist, und die Federanordnung (110, 200) ausgebildet ist, die Pendelmasse (25, 30) aus der ausgelenkten Position in die Ruheposition (45) zu überführen,
- wobei das erste Pendelflanschteil (65) eine erste Aufnahme (140) und das zweite Pendelflanschteil (70) eine in axialer Richtung gegenüberliegend zur ersten Aufnahme (140) angeordnete zweite Aufnahme (145) aufweist,
- wobei die Federanordnung (110, 200) axial im Wesentlichen zwischen den Pendelflanschteilen (65, 70) und in den Aufnahmen (140, 145) zumindest teilweise angeordnet ist.

2. Fliehkraftpendel (10) nach Anspruch 1,
- wobei die erste und/oder zweite Aufnahme (140, 145) eine im Wesentlichen in radialer Richtung verlaufende erste Anschlagsfläche (510, 525) und eine in Umfangsrichtung zur ersten Anschlagsfläche (510, 525) beabstandete zweite Anschlagsfläche (520, 530) aufweist,
- wobei die beiden Anschlagsflächen (510, 520, 525, 530) bezogen auf die Drehachse (15) einen ersten Winkel (α₁) einschließen,
- wobei ein erstes Längsende (120) zu einem zweiten Längsende (125) der Federanordnung (110, 200) bezogen auf die Drehachse (15) einen zweiten Winkel (α₂) einschließen,
- wobei der zweite Winkel (α₂) kleiner als der ersten Winkel (α₁) ist.

3. Fliehkraftpendel (10) nach Anspruch 1 oder 2,
- wobei die erste Aufnahme (140) als in axialer Richtung erstreckende erste Ausbuchtung (500) im ersten Pendelflanschteil (65) und/oder die zweite Aufnahme (145) als in axialer Richtung erstreckende zweite Ausbuchtung (505) ausgebildet ist.

4. Fliehkraftpendel (10) nach einem der Ansprüche 1 bis 3,
- wobei die Pendelmasse (25, 30) eine dritte Aufnahme (300) aufweist,
- wobei in der dritten Aufnahme (300) ein erstes Längsende (120) der Federanordnung (110, 200) angeordnet ist,
- wobei vorzugsweise die Pendelmasse (25, 30) ein erstes Pendelmassenteil (400) und wenigstens ein zweites Pendelmassenteil (405, 410) aufweist,
- wobei vorzugsweise das erste Pendelmassenteil (400) eine erste Ausnehmung (415) und das zweite Pendelmassenteil (405, 410) eine zweite Ausnehmung (420, 425) aufweisen,
- wobei vorzugsweise die erste und die zweite Ausnehmung (415, 420, 425) überlappend angeordnet sind und die dritte Aufnahme (300) ausbilden.

5. Fliehkraftpendel (10) nach einem der Ansprüche 1 bis 4,
- wobei eine weitere Pendelmasse (30) vorgesehen ist,
- wobei die weitere Pendelmasse (30) axial zwischen den beiden Pendelflanschteilen (65, 70) angeordnet ist,
- wobei die weitere Pendelmasse (30) beschränkt beweglich mit dem Pendelflansch (20) gekoppelt ist,
- wobei die Federanordnung (110, 200) in Umfangsrichtung zwischen der Pendelmasse (25) und der weiteren Pendelmasse (30) angeordnet ist.

6. Fliehkraftpendel (10) nach Anspruch 5,
- wobei die weitere Pendelmasse (30) eine vierte Aufnahme (305) aufweist,
- wobei die vierte Aufnahme (305) in Umfangsrichtung gegenüberliegend zur dritten Aufnahme (300) angeordnet ist,
- wobei in der vierten Aufnahme (305) ein zweites Längsende (125) der Federanordnung (110, 200) angeordnet ist.

7. Fliehkraftpendel (10) nach einem der Ansprüche 1 bis 6,
- wobei die Federanordnung (110, 200) ein erstes Federelement (205) und wenigstens ein zweites Federelement (210) umfasst,
- wobei das erste Federelement (205) umfangsseitig das zweite Federelement (210) umgreift,
- wobei das erste Federelement (205) eine erste Längserstreckung und das zweite Federelement (210) ein zur ersten Längserstreckung abweichende zweite Längserstreckung aufweist,
- wobei das erste Federelement (205) ausgebildet ist, ein Anschlagen der Pendelmasse (25, 30) an der Federanordnung (110, 200) in einem ersten Betriebszustand des Fliehkraftpendels (10) abzufedern,
- wobei das erste Federelement (205) zusammen mit dem zweiten Federelement (210) ausgebildet ist, ein Anschlagen der Pendelmasse (25, 30) an der Federanordnung (110, 200) in einem vom ersten Betriebszustand unterschiedlichen zweiten Betriebszustand des Fliehkraftpendels (10) abzufedern.

8. Fliehkraftpendel (10) nach einem der Ansprüche 1 bis 7,
- wobei das erste Pendelflanschteil (65) mittels einer radial innen angeordneten ersten Verbindungseinrichtung (75) und einer radial außen zur ersten Verbindungseinrichtung (75) angeordnetem zweiten Verbindungseinrichtung (95) mit dem zweiten Pendelflanschteil (70) verbunden ist,
- wobei radial zwischen der ersten und dem zweiten Verbindungseinrichtung (75, 95) die Federanordnung (110, 200) angeordnet ist.

## Claims

1. A centrifugal pendulum (10) that is mountable rotatably about a rotational axis (15),
- having a pendulum flange (20) and at least one pendulum mass (25, 30),
- wherein the pendulum mass (25, 30) is coupled to the pendulum flange (20) with limited mobility,
- wherein the pendulum flange (20) has a first pendulum flange part (65) and at least one second pendulum flange part (70),
- wherein the pendulum mass (25, 30) is arranged axially at least partially between the first pendulum flange part (65) and the second pendulum flange part (70), **characterised in that**
- a spring arrangement (110, 200) is provided,
- wherein the spring arrangement (110, 200) is at least partially arranged axially between the pendulum flange parts (65, 70),
- wherein the spring arrangement (110, 200) is coupled to the pendulum mass (25, 30) for power transmission between the pendulum mass (25, 30) and the spring arrangement (110, 200), wherein the centrifugal pendulum (10) has a slotted guide (35),
- wherein the slotted guide (35) couples the pendulum mass (25, 30) to the pendulum flange (20) and is designed to guide the pendulum mass (25, 30) in a pendulum motion along a pendulum path (40),
- wherein the spring arrangement (110, 200) is coupled to the pendulum flange (20), and the spring arrangement (110, 200) is designed to at least partially limit the pendulum path (40) of the pendulum mass (25, 30) and/or the pendulum mass (25, 30) has a rest position (45) and at least one deflected position (183) on the pendulum path (40), and the spring arrangement (110, 200) is designed to transition the pendulum mass (25, 30) from the deflected position to the rest position (45),
- wherein the first pendulum flange part (65) has a first holder (140) and the second pendulum flange part (70) has a second holder (145) arranged opposite to the first holder (140) in the axial direction,
- wherein the spring arrangement (110, 200) is at least partially arranged axially substantially between the pendulum flange parts (65, 70) and in the holders (140, 145).

2. The centrifugal pendulum (10) according to claim 1,
- wherein the first and/or second holder (140, 145) has a first stop surface (510, 525), running substantially in the radial direction, and a second stop surface (520, 530), spaced apart from the first stop surface (510, 525) in the circumferential direction,
- wherein the two stop surfaces (510, 520, 525, 530) enclose a first angle (α₁) with respect to the rotational axis (15),
- wherein a first longitudinal end (120) to a second longitudinal end (125) of the spring arrangement (110, 200) encloses a second angle (α₂) with respect to the rotational axis (15),
- wherein the second angle (α2) is smaller than the first angle (α₁).

3. The centrifugal pendulum (10) according to claim 1 or 2,
- wherein the first holder (140) is designed as a first bulge (500) extending in the axial direction in the first pendulum flange part (65) and/or the second holder (145) is designed as a second bulge (505) extending in the axial direction.

4. The centrifugal pendulum (10) according to any one of claims 1 to 3,
- wherein the pendulum mass (25, 30) has a third holder (300),
- wherein a first longitudinal end (120) of the spring arrangement (110, 200) is arranged in the third holder (300),
- wherein the pendulum mass (25, 30) preferably has a first pendulum mass part (400) and at least one second pendulum mass part (405, 410),
- wherein the first pendulum mass part (400) preferably has a first recess (415), and the second pendulum mass part (405, 410) has a second recess (420, 425),
- wherein the first and second recesses (415, 420, 425) are preferably arranged so as to overlap and form the third holder (300).

5. The centrifugal pendulum (10) according to any one of claims 1 to 4,
- wherein a further pendulum mass (30) is provided,
- wherein the further pendulum mass (30) is arranged axially between the two pendulum flange parts (65, 70),
- wherein the further pendulum mass (30) is coupled to the pendulum flange (20) with limited mobility,
- wherein the spring arrangement (110, 200) is arranged between the pendulum mass (25) and the further pendulum mass (30) in the circumferential direction.

6. The centrifugal pendulum (10) according to claim 5,
- wherein the further pendulum mass (30) has a fourth holder (305),
- wherein the fourth holder (305) is arranged opposite the third holder (300) in the circumferential direction,
- wherein a second longitudinal end (125) of the spring arrangement (110, 200) is arranged in the fourth holder (305).

7. The centrifugal pendulum (10) according to any one of claims 1 to 6,
- wherein the spring arrangement (110, 200) comprises a first spring element (205) and at least one second spring element (210),
- wherein the first spring element (205) encompasses the second spring element (210) on the circumferential side,
- wherein the first spring element (205) has a first longitudinal extension, and the second spring element (210) has a second longitudinal extension that differs from the first longitudinal extension,
- wherein the first spring element (205) is designed to cushion an impact of the pendulum mass (25, 30) on the spring arrangement (110, 200) in a first operating state of the centrifugal pendulum (10),
- wherein the first spring element (205) is designed, together with the second spring element (210), to cushion an impact of the pendulum mass (25, 30) on the spring arrangement (110, 200) in a second operating state of the centrifugal pendulum (10) that is different from the first operating state.

8. The centrifugal pendulum (10) according to any one of claims 1 to 7,
- wherein the first pendulum flange part (65) is connected to the second pendulum flange part (70) by means of a first connecting device (75) arranged radially on the inside and a second connecting device (95) arranged radially on the outside of the first connecting device (75),
- wherein the spring arrangement (110, 200) is arranged radially between the first and second connecting devices (75, 95).

## Revendications

1. Pendule centrifuge (10) pouvant être monté de manière rotative autour d'un axe de rotation (15),
- comportant une bride de pendule (20) et au moins une masse de pendule (25, 30),
- la masse de pendule (25, 30) étant accouplée à la bride de pendule (20) de sorte qu'elle puisse se déplacer de façon limitée,
- la bride de pendule (20) comportant une première partie bride de pendule (65) et au moins une seconde partie bride de pendule (70),
- la masse de pendule (25, 30) étant disposée axialement au moins partiellement entre la première partie bride de pendule (65) et la seconde partie bride de pendule (70), **caractérisé en ce que**
- il est prévu un agencement de ressorts (110, 200),
- l'agencement de ressorts (110, 200) étant au moins partiellement disposé axialement entre les parties brides de pendule (65, 70),
- l'agencement de ressorts (110, 200) étant accouplé à la masse de pendule (25, 30) pour la transmission de puissance entre la masse de pendule (25, 30) et l'agencement de ressorts (110, 200), le pendule centrifuge (10) comportant un guide à coulisse (35),
- le guide à coulisse (35) accouplant la masse de pendule (25, 30) à la bride de pendule (20) et étant conçu pour guider la masse de pendule (25, 30) dans un mouvement pendulaire le long d'une piste de pendule (40),
- l'agencement de ressorts (110, 200) étant accouplé à la bride de pendule (20) et l'agencement de ressorts (110, 200) étant conçu pour limiter au moins partiellement la piste de pendule (40) de la masse de pendule (25, 30) et/ou la masse de pendule (25, 30) présentant sur la piste de pendule (40) une position de repos (45) et au moins une position fléchie (183) et l'agencement de ressorts (110, 200) étant conçu pour déplacer la masse de pendule (25, 30) de la position déviée dans la position de repos (45),
- la première partie bride de pendule (65) comportant un premier logement (140) et la seconde partie bride de pendule (70) comportant un deuxième logement (145) disposé axialement à l'opposé du premier réceptacle (140),
- l'agencement de ressorts (110, 200) étant au moins partiellement disposé axialement essentiellement entre les parties brides de pendule (65, 70) et dans les logements (140, 145).

2. Pendule centrifuge (10) selon la revendication 1,
- le premier et/ou le deuxième logement (140, 145) présentant une première surface de butée (510, 525) s'étendant essentiellement dans le sens radial et une seconde surface de butée (520, 530) espacée de la première surface de butée (510, 525) dans le sens circonférentiel,
- les deux surfaces de butée (510, 520, 525, 530) formant un premier angle (α₁) par rapport à l'axe de rotation (15),
- une première extrémité longitudinale (120) à une seconde extrémité longitudinale (125) de l'agencement de ressorts (110, 200) formant un second angle (α₂) par rapport à l'axe de rotation (15),
- le second angle (α₂) étant inférieur au premier angle (α₁).

3. Pendule centrifuge (10) selon la revendication 1 ou 2,
- le premier logement (140) étant conçu comme un premier renflement (500) s'étendant axialement dans la première partie bride de pendule (65) et/ou le deuxième logement (145) étant conçu comme un second renflement (505) s'étendant dans le sens axial.

4. Pendule centrifuge (10) selon l'une quelconque des revendications 1 à 3,
- la masse de pendule (25, 30) comportant un troisième logement (300),
- une première extrémité longitudinale (120) de l'agencement de ressorts (110, 200) étant disposée dans le troisième logement (300),
- la masse de pendule (25, 30) comportant de préférence une première partie masse de pendule (400) et au moins une seconde partie masse de pendule (405, 410),
- la première partie masse de pendule (400) comportant de préférence un premier évidement (415) et la seconde partie masse de pendule (405, 410) comportant un second évidement (420, 425),
- les premier et second évidements (415, 420, 425) étant de préférence disposés de manière à se chevaucher et à former le troisième logement (300).

5. Pendule centrifuge (10) selon l'une quelconque des revendications 1 à 4,
- une autre masse de pendule (30) étant prévue,
- l'autre masse de pendule (30) étant disposée axialement entre les deux parties bride de pendule (65, 70),
- l'autre masse de pendule (30) étant accouplée à la bride de pendule (20) de sorte qu'elle puisse se déplacer de façon limitée,
- l'agencement de ressorts (110, 200) étant disposé dans le sens circonférentiel entre la masse de pendule (25) et l'autre masse de pendule (30).

6. Pendule centrifuge (10) selon la revendication 5,
- l'autre masse de pendule (30) comportant un quatrième logement (305),
- le quatrième logement (305) étant disposé dans le sens circonférentiel à l'opposé du troisième logement (300),
- une seconde extrémité longitudinale (125) de l'agencement de ressorts (110, 200) étant disposée dans le quatrième logement (305).

7. Pendule centrifuge (10) selon l'une quelconque des revendications 1 à 6,
- l'agencement de ressorts (110, 200) comprenant un premier élément de ressort (205) et au moins un second élément de ressort (210),
- le premier élément de ressort (205) englobant le second élément de ressort (210) sur le côté circonférentiel,
- le premier élément de ressort (205) comportant une première extension longitudinale et le second élément de ressort (210) comportant une seconde extension longitudinale qui diffère de la première extension longitudinale,
- le premier élément de ressort (205) étant conçu pour amortir un choc de la masse de pendule (25, 30) sur l'agencement de ressorts (110, 200) dans un premier état de fonctionnement du pendule centrifuge (10),
- le premier élément de ressort (205) avec le second élément de ressort (210) étant conçu pour amortir un choc de la masse de pendule (25, 30) sur l'agencement de ressorts (110, 200) dans un second état de fonctionnement du pendule centrifuge (10) différent du premier état de fonctionnement.

8. Pendule centrifuge (10) selon l'une quelconque des revendications 1 à 7,
- la première partie bride de pendule (65) étant reliée à la seconde partie bride de pendule (70) au moyen d'un premier dispositif de liaison (75) disposé radialement à l'intérieur et d'un second dispositif de liaison (95) disposé radialement à l'extérieur de la première partie de liaison (75),
- l'agencement de ressorts (110, 200) étant disposé radialement entre le premier et le second dispositif de liaison (75, 95).
